# EUROPÄISCHE PATENTSCHRIFT

(11) **EP 2 977 871 B1**
(45) Veröffentlichungstag und Bekanntmachung des Hinweises auf die Patenterteilung: **27.05.2020**
(21) Anmeldenummer: 14178193.0
(22) Anmeldetag: 23.07.2014
(51) Int. Cl.: G06F 3/044, G06F 3/045, G06F 3/046, G06F 3/03, G06F 3/041, G06F 3/0488

(54) **Touchscreen-Gerät**
Touch screen device
Appareil à écran tactile

(43) Veröffentlichungstag der Anmeldung: 27.01.2016
(73) Patentinhaber: Siemens Aktiengesellschaft, 80333 München (DE)
(72) Erfinder: Glaser, Maximilian, 91365 Weilersbach (DE); Hauf, Ronald, 91096 Möhrendorf (DE); Moniac, Sven, 91056 Erlangen (DE); Schwesig, Günter, 91054 Erlangen (DE); Singer, Marc, 91301 Forchheim (DE)

(56) Entgegenhaltungen:
- EP-A1- 1 431 866
- EP-A2- 2 400 377
- WO-A2-2008/085418
- DE-A1-102012 201 379
- DE-A1-102012 203 831
- US-A1- 2009 309 616
- US-A1- 2011 209 102
- US-A1- 2013 141 388

## Beschreibung

Die Erfindung betrifft ein Touchscreen-Gerät zur Verwendung in einem industriellen Automatisierungssystem, umfassend wenigstens einen Touchscreen sowie einen Touchscreen-Controller, wobei bei dem Touchscreen-Gerät Bedienhandlungen eines Benutzers mittels wenigstens zwei diversitärer Funktionsprinzipien erfassbar sind. Ferner betrifft die Erfindung ein Verfahren zum Erfassen einer an einem entsprechenden Touchscreen-Gerät vorgenommenen Bedienhandlung.

Zum Bedienen, Beobachten oder zur Inbetriebnahme von Geräten aus dem Bereich der industriellen Automatisierungstechnik ist eine Vielzahl unterschiedlicher Geräte bekannt, die häufig als HMI-Geräte (Human Machine Interface) bezeichnet werden. Zur einfachen Bedienbarkeit umfassen solche Geräte häufig einen Touchscreen, an dem Bedienhandlungen durch Berühren der Oberfläche durch den Benutzer, gegebenenfalls unter Zuhilfenahme von Eingabemitteln, durchgeführt werden. Diese Geräte werden daher nachfolgend als Touchscreen-Geräte bezeichnet.

Bei der Verwendung von Geräten zum Bedienen, Beobachten oder zur Inbetriebnahme von Geräten aus dem Bereich der industriellen Automatisierungstechnik sind häufig erhöhte Sicherheitsanforderungen zu beachten. So sind an derartigen HMI-Geräten mitunter bestimmte Bedienelemente redundant vorhanden. Beispielsweise wird das sicherheitsrelevante Öffnen einer Schutztür nur dann ausgeführt, wenn gleichzeitig zwei nicht unmittelbar nebeneinander angeordnete Tastschalter zum Öffnen der Tür betätigt werden.

Auch bei Geräten zum Bedienen und Beobachten und zur Verwendung in einem industriellen Automatisierungssystem besteht zunehmend der Wunsch, diese Geräte mit berührungsempfindlichen Touchscreens auszustatten. Dies erhöht den Bedienkomfort, erleichtert die einfache Eingabe komplexer Bedienfunktionen und verbessert somit insgesamt die Bedienbarkeit. Nachteilig bei derartigen Touchscreen-Geräten ist jedoch, dass leicht unbeabsichtigte Fehlbedienungen, beispielsweise durch versehentliche Berührungen oder Verschmutzung, ausgeführt werden.

Die bloße Übertragung bisheriger Sicherheitsmechanismen auf den Touchscreen, nämlich die Bereitstellung redundanter Bedienmittel, die auch auf einem Touchscreen realisiert werden könnte, genügt den gegebenen Sicherheitsanforderungen nicht. Insbesondere muss auch ein sicherer Betrieb des Touchscreens als solches gewährleistet werden.

Aus der Druckschrift DE102012203831A1 gehen ein Verfahren zur sicheren Berührungseingabe an einer berührungsempfindlichen Eingabeanordnung sowie eine entsprechende Eingabeanordnung mit einer Erfassungsvorrichtung zur Umsetzung einer Berührungseingabe in Eingabeinformation, welche von der Position der Berührung abhängig ist, hervor. Dabei erfolgt parallel zum Erfassen von positionsabhängiger Eingabeinformation einer Berührungseingabe anhand einer zusätzlichen Prüfvorrichtung das Erzeugen mindestens eines Prüfsignals, welches von einer bei der Berührungseingabe ausgeübten Kraft abhängig ist.

Aus der Druckschrift WO2008/085418A2 geht ein Multi-Touch-Panel hervor, bei dem ein oder mehrere Näherungssensoren in Kombination mit einem oder mehreren Touch-Sensoren verwendet werden um die Präsenz eines Fingers zu detektieren.

Aus der Druckschrift US2009/309616A1 geht ein Touch-Panel hervor, bei dem mehrere Sensoren übereinander angeordnet sind. Eine Berührung des Touch-Screens wird sowohl mittels eines kapazitiven Sensors als auch mittels eines Drucksensors erfasst.

Aus der Druckschrift DE102012201379 geht eine berührungsempfindliche Bedieneinheit zur Bedienung eines medizinischen Gerätes hervor, aufweisend ein Eingabefeld mit zumindest einem Sensor, welcher Sensor zwei gegenüberliegende, elektrisch leitfähige, im Grundzustand voneinander elektrisch getrennte Schichten aufweist, die durch eine Berührung der der Berührung zugewandten ersten Schicht seitens einer Bedienperson an der Berührungsposition mittels Druck miteinander leitend verbindbar sind, wobei der Sensor derart ausgebildet ist, dass die Berührung durch zwei unterschiedliche Messverfahren erfassbar ist, wobei das erste Messverfahren von einem resistiven Berührungsmessverfahren und das zweite Messverfahren von einem kapazitiven Berührungsmessverfahren gebildet wird.

Aus der Druckschrift US 2011/0209102 A1 ist ein Eingabegerät mit zwei Bildschirmen für einen Computer bekannt. Zur Bedienung des Computers können Gesten definiert werden, die eine gleichzeitige Berührung der beiden touch-sensitiven Bildschirme erfordern.

Aus der EP 2400377 A2 ist ein Touchscreen-Gerät bekannt, welches zwei unterschiedliche Sensor-Techniken auf einem Touchpad realisiert. Das Touchscreen-Gerät umfasst einen ersten Teilbereich mit einem ersten Sensor zum Erfassen eines Fingerabdrucks sowie einen zweiten Teilbereich mit einem zweiten Sensor zum Erfassen eines Berührungs-Zustands. Mit dem Touchscreen-Gerät kann sowohl ein Fingerabdruck erkannt als auch eine Touch-Bedienung durchgeführt werden.

Aufgabe der vorliegenden Erfindung ist es, die Fehlersicherheit eines Touchscreen-Gerätes zur Verwendung in einem industriellen Automatisierungssystem zu verbessern.

Diese Aufgabe wird gelöst durch ein Touchscreen-Gerät mit den Merkmalen gemäß Patentanspruch 1. Ferner wird diese Aufgabe gelöst durch ein Verfahren zum Erfassen einer an einem Touchscreen eines Touchscreen-Gerätes zur Verwendung in einem industriellen Automatisierungssystem vorgenommenen Bedienhandlung eines Benutzers mit den in Patentanspruch 6 angegebenen Verfahrensschritten.

Das erfindungsgemäße Touchscreen-Gerät zur Verwendung in einem industriellen Automatisierungssystem umfasst wenigstens einen Touchscreen sowie einen Touchscreen-Controller. Zum Erreichen der Berührungsempfindlichkeit sind dabei unterschiedliche Funktionsprinzipien bekannt, die nachfolgend kurz aufgezählt werden sollen:
- Optische Touchscreens umfassen optische Mittel (Strahler, Optische Sensoren, Kameras etc.) zum Erfassen einer Berührung. Einfache optische Systeme sind aus einer Vielzahl von Lichtschranken aufgebaut, die aus einer Kombination von Strahlern, die Licht aussenden, und bezüglich des ausgesendeten Lichts empfindlichen Sensoren aufgebaut sind.
- Druckempfindliche (resistive) Touchscreens reagieren auf den durch eine Berührung erzeugten Druck. In der Regel werden dabei an der Stelle der Berührung leitfähige Schichten aufeinander gepresst, wodurch ein Stromfluss zwischen den Schichten hervorgerufen wird, der mittels entsprechender Sensoren detektiert werden kann.
- Bei kapazitiven Touchscreens wird zwischen unterschiedlichen Schichten durch Anlegen einer Spannung ein elektrisches Feld zwischen den Schichten erzeugt. Durch eine Berührung entsteht ein Ladungstransport, der das elektrische Feld verändert und zu einem messbaren Stromfluss führt.
- Induktive Touchscreens sind sensitiv gegenüber einem in ihre unmittelbare Umgebung gebrachten Magnetfeld. Aufgrund dieses Wirkungsprinzips kann bei einem induktiven Touchscreen die bloße Berührung mit einem Finger nicht erfasst werden. Vielmehr sind besondere Eingabemittel, beispielsweise Eingabestifte mit integrierten Spulen, erforderlich.

Die genannten Funktionsprinzipien sind die am weitesten verbreiteten. Daneben existieren jedoch noch weitere, in der Praxis weniger häufig angewendete Funktionsprinzipien zum Erfassen einer Berührung. Die obige Aufzählung soll daher nicht als abschließend angesehen und die Erfindung nicht darauf beschränkt werden.

Bei dem erfindungsgemäßen Touchscreen-Gerät wird die Sicherheit dadurch erhöht, dass wenigstens zwei diversitäre Funktionsprinzipien zum Erkennen einer Berührung vorhanden sind. Dies hat den Vorteil, dass in gewissem Umfang eine Überprüfung der ordnungsgemäßen Funktion des Touchscreens durch den Touchscreen selbst ermöglicht wird. Da die diversitären Funktionsprinzipien auf äußere Störeinflüsse völlig unterschiedlich reagieren, können ferner Störungen von außen leichter erkannt werden. Weiterhin können die verwendeten Funktionsprinzipien vorzugsweise so ausgewählt werden, dass die Sensoren nicht gleichzeitig auf die am häufigsten zu erwartenden Störeinflüsse reagieren.

Von einem Benutzer ausführbare, sichere Bedienhandlungen werden dabei vorteilhaft so definiert, dass zum Erkennen der entsprechenden Bedienhandlungen stets wenigstens zwei diversitäre Funktionsprinzipien angewandt werden. Bestimmte, sicherheitsrelevante Bedienhandlungen erfordern so stets das Zusammenspiel wenigstens zweier diversitärer Funktionsprinzipien.

Vorzugsweise handelt es sich bei dem verwendeten Touchscreen um einen so genannten Multi-Touch-Touchscreen, bei dem gleichzeitig mehrere Berührungen erkannt werden können.

Der erfindungsgemäße Touchscreen ist in mehrere Bildschirmbereiche unterteilt, wobei für eine bestimmte Bedienhandlung in einem ersten Teilbereich des Touchscreens lediglich ein erstes Funktionsprinzip zum Erkennen einer Berührung und in einem zweiten Teilbereich des Touchscreens lediglich ein zweites Funktionsprinzip zum Erkennen einer Berührung realisiert ist. Dies erleichtert für den Benutzer die Bedienung, da unterschiedliche Funktionsprinzipien teilweise auch unterschiedliche Bedienhandlungen erfordern und für den Benutzer daher klarer erkennbar wird, wie ein bestimmter Teilbereich vorzugsweise zu bedienen ist. Zum Beispiel reicht für das kapazitive Funktionsprinzip in der Regel schon eine sehr leichte Berührung der Touchscreen-Oberfläche aus, um eine Berührung sicher zu erkennen. Druckempfindliche Touchscreens hingegen erfordern in der Regel einen höheren Kraftaufwand, damit eine Berührung sicher erkannt wird.

Die an einem erfindungsgemäßen Touchscreen-Gerät ausführbaren Bedienhandlungen werden zum Ausführen einer bestimmten Bedienfunktion vorzugsweise so definiert, dass es die bestimmte Bedienfunktion erfordert, dass bei der zugehörigen Bedienhandlung zumindest für eine bestimmte Zeitdauer die gleichzeitige Berührung wenigstens zweier Teilbereiche des Touchscreens erforderlich ist, wobei in dem ersten Teilbereich das Erkennen einer Berührung auf dem ersten Funktionsprinzip und für den zweiten Teilbereich das Erkennen einer Berührung auf dem zweiten Funktionsprinzip beruht. Eine Bedienfunktion wird somit nur bei einer ordnungsgemäßen Funktion beider nach den unterschiedlichen Funktionsprinzipien arbeitenden Sensoren ausgelöst. Dadurch werden Fehlbedienungen infolge von Störungen, die auf den Touchscreen einwirken, oder infolge technischer Mängel des Touchscreens weitgehend eliminiert.

Die Erfindung wird nachfolgend anhand von Ausführungsbeispielen näher erläutert. Dabei zeigen:
- FIG 1: Ein erfindungsgemäßes Touchscreen-Gerät zur Verwendung in einem industriellen Automatisierungssystem
- FIG 2: ein Ausführungsbeispiel zur Einteilung eines Touchscreens in unterschiedliche Teilbereiche,
- FIG 3: ein Ablaufschema für ein Verfahren zum Erfassen einer an einem Touchscreen vorgenommenen Bedienhandlung.

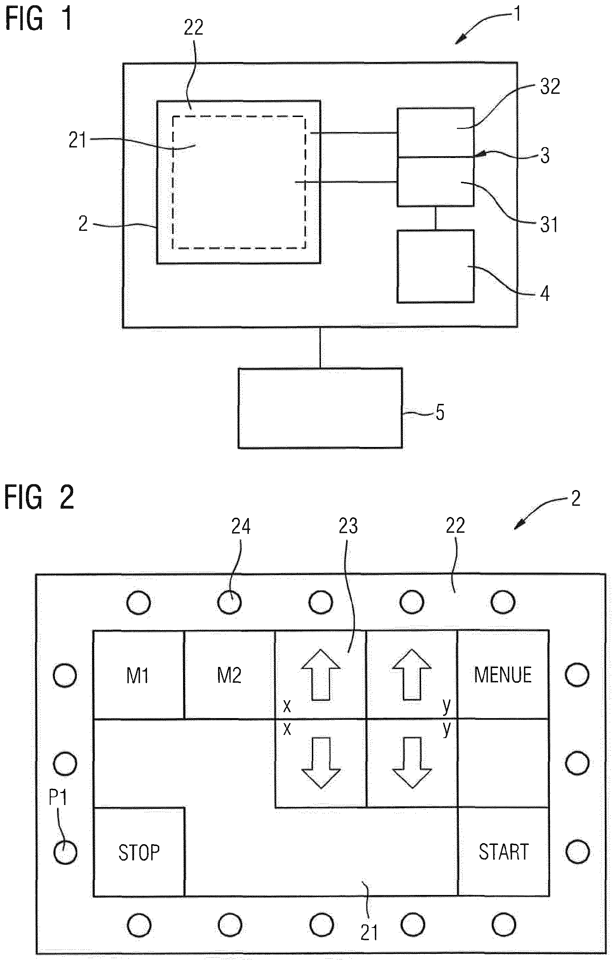

Figur 1 veranschaulicht die Erfindung anhand eines Touchscreen-Gerätes 1 aus dem Bereich der industriellen Automatisierungstechnik, welches im Ausführungsbeispiel als HMI-Gerät (Human Machine Interface) ausgebildet ist. Das Touchscreen-Gerät 1 umfasst als Eingabemittel einen Touchscreen 2, mit dem durch entsprechende Berührungen der Oberfläche durch einen Benutzer Bedienhandlungen vorgenommen und mittels eines Touchscreen-Controllers 3 erfasst und ausgewertet werden können. Zur Abarbeitung einer in der beschriebenen Weise ausgelösten Bedienfunktion umfasst das Touchscreen-Gerät 1 ferner eine Prozessoreinheit 4.

Üblicherweise betreffen die von dem Touchscreen-Gerät 1 ausgeführten Bedienfunktionen nicht nur das Touchscreen-Gerät 1 selbst, sondern sie können weitreichende Auswirkungen auf das gesamte industrielle Automatisierungssystem haben, in das das Touchscreen-Gerät 1 eingebunden ist. Dies ist in Figur 1 dadurch veranschaulicht, dass das Touchscreen-Gerät 1 mit einem weiteren Gerät der industriellen Automatisierungsumgebung verbunden ist, beispielsweise einer industriellen Steuerung 5. Letztendlich wird somit über das Touchscreen-Gerät 1 auch eine sichere Bedienung der industriellen Steuerung 5 ermöglicht.

Bei dem Touchscreen 2 gemäß dem Ausführungsbeispiel werden Berührungen der Oberfläche durch einen Benutzer anhand zweier diversitärer Funktionsprinzipien des Touchscreens 2 erkannt. Gemäß einem ersten Funktionsprinzip umfasst der Touchscreen 2 eine PCAP- (Projective Capacitive-) Sensor-Schicht, wodurch ein Spezialfall eines kapazitiven Touchscreens realisiert ist. Dabei werden zwei Ebenen mit leitfähigen Mustern (zumeist Streifen oder Rauten) übereinander, jedoch isoliert voneinander angebracht. Diese Ebenen bilden einen Kondensator, dessen Kapazität sich durch Berührung ändert, wodurch messbare Ströme an den Anschlüssen des leitfähigen Musters hervorgerufen werden. Die PCAP-Technik bietet den Vorteil, dass damit auch mehrere Berührungen gleichzeitig oder Gesten erkennbar sind, wofür sich auch die Bezeichnung "Multi-Touch" durchgesetzt hat.

Als zweites Funktionsprinzip ist bei dem Touchscreen 2 eine druckempfindliche Schicht vorhanden, durch die ebenfalls Berührungen erfassbar sind. Als druckempfindlicher Sensor kommt dabei vorteilhaft eine Piezo-Sensor-Schicht (in Form einer Matrix) in Betracht. Vorteilhaft sind bei dieser Piezo-Sensor-Schicht die Ansprechschwellen einstellbar, so dass der für eine erfassbare Berührung erforderliche Druck auf den Touchscreen und damit die Empfindlichkeit des Touchscreens frei wählbar ist. Im Hinblick auf die Verwendung in einer industriellen Automatisierungsumgebung kann dadurch festgelegt werden, dass sehr leichte Berührungen nicht als Berührungen erkannt werden, womit sich unbeabsichtigte Bedienungen ebenfalls verhindern lassen.

Gemäß einem Beispiel ist der Touchscreen 2 in zwei Bereiche unterteilt, nämlich in einen inneren zentralen Bereich 21, in dem Berührungen mittels der PCAP-Technik erfasst werden, und in einen den inneren zentralen Bereich 21 umschließenden äußeren Bereich 22, in dem Berührungen mittels der Piezo-Sensor-Technik erfasst werden. Dabei wird an dieser Stelle darauf hingewiesen, dass die Einteilung des Touchscreens sowie die Auswahl der verwendeten Sensor-Techniken rein beispielhaft zu verstehen ist und eine große Anzahl an Variationsmöglichkeiten erlaubt. Weiterhin sei angemerkt, dass die Bildschirmbereiche, in denen die einzelnen Funktionsprinzipien des Touchscreens 2 realisiert werden, auch überlappen können. Es ist sogar möglich, dass über den gesamten Bildschirmbereich des Touchscreens mehrere Funktionsprinzipien gleichzeitig anwendbar sind.
Entsprechend der Aufteilung des Touchscreen 2 ist auch der Touchscreen-Controller 3 unterteilt in einen PCAP-Sensor-Controller 31 und einen Piezo-Sensor-Controller 32. Physikalisch können die beiden Controller 31 und 32 auch voneinander getrennte Halbleiterbauelemente sein, die jedoch aufgrund ihres funktionellen Zusammenhangs im Blockschaltbild als Touchscreen-Controller 3 zusammengefasst sind.

Eine tiefergehende Veranschaulichung des Touchscreens 2 gemäß dem Ausführungsbeispiel nach Figur 1 zeigt Figur 2. Demgemäß sind in dem inneren, zentralen Teilbereich 21 des Touchscreens 2 mehrere Felder definiert, deren Berührung unterschiedliche definierte Bedienfunktionen auslösen. Damit für den Benutzer ersichtlich ist, welche Bedienfunktion sich hinter dem jeweiligen Feld verbirgt, werden in dem betreffenden Feld Schlüsselwörter (START, STOP, MENUE) einprägsame Abkürzungen (M1, M2 für Betriebsmodus 1 bzw. Betriebsmodus 2) oder Pfeilsymbole (im dargestellten Beispiel zur Erhöhung oder Erniedrigung des X-Wertes bzw. des Y-Wertes zum Verfahren der entsprechenden Achsen) auf dem Touchscreen 2 angezeigt. Weiterhin werden auf dem äußeren Teilbereich 22 des Touchscreens 2 bestimmte Druckpunkte in Form vorzugsweise farbig (aus der Figur nicht ersichtlich) dargestellter Kreise auf der Touchscreen-Oberfläche angezeigt. Mit dieser Einteilung des Touchscreen 2 lassen sich nun Bedienhandlungen definieren, mittels derer bestimmte Bedienfunktionen ausgelöst bzw. ausgeführt werden und bei denen eine unbeabsichtigte Ausführung weitgehend ausgeschlossen ist. Eine entsprechende fehlersichere definierte Bedienhandlung wird insbesondere dadurch erreicht, dass diese die gleichzeitige Berührung eines bestimmten Feldes des Teilbereichs 21 sowie eines definierten Punktes des Teilbereichs 22 erfordert. Beispielsweise erfordert im dargestellten Beispiel das Verfahren der X-Achse in positiver Richtung gleichzeitig mit der Berührung des Feldes 23 eine Berührung des Druckpunktes P1, letzteres mit einer Andruckkraft, die einen bestimmten Schwellenwert überschreitet. Die Kombination der einzelnen Felder bzw. Punkte kann bei der Definition entsprechender Bedienhandlungen festgelegt werden. Vorzugsweise werden im dargestellten Beispiel den Feldern des Teilbereichs 21 jeweils unterschiedliche Druckpunkte des Teilbereichs 22 zugeordnet. Dabei können den einzelnen Feldern jeweils möglichst weit entfernt liegende Druckpunkte zugeordnet werden, so dass eine einhändige Bedienung ausgeschlossen werden kann. Vorteilhaft kann die Bedienung dadurch erleichtert werden, dass zulässige Kombinationen durch optische Anzeigemittel kenntlich gemacht werden. Beispielsweise kann ein Feld aus dem Teilbereich 21 mit der gleichen Hintergrund-Farbe belegt werden, in der auch der zugehörige Druckpunkt in dem Teilbereich 22 dargestellt wird. Eine weitere beispielhafte Möglichkeit zur Darstellung zusammengehöriger Paare besteht darin, dass nach der Berührung eines Feldes aus dem Teilbereich 21 der zugehörige Druckpunkt aus dem Teilbereich 22 auffällig seine Farbe ändert oder blinkt. Erst wenn während der Berührung des betreffenden Felds aus dem Teilbereich 21 gleichzeitig auch der zugehörige Berührpunkt aus dem Teilbereich 22 berührt wird, wird eine entsprechende Funktion, beispielsweise das Verfahren einer Achse, ausgelöst bzw. ausgeführt.

Durch definierte Bedienhandlungen, die die gleichzeitige Berührung unterschiedlicher Bildschirmbereiche erfordern, bei denen die Berührungen in unterschiedlichen Sensortechniken erfasst werden, wird die Sicherheit bei der Bedienung eines Geräts aus dem Bereich der industriellen Automatisierungstechnik wesentlich erhöht.

In dem aufgezeigten Beispiel wird eine Bedienfunktion nur dann bzw. nur so lange ausgeführt, wie vorgegebene Teilfelder der Touchscreen-Oberfläche gleichzeitig berührt werden. Wird lediglich das Feld 23 oder der Punkt P1 berührt, so wird die im Zusammenhang mit diesen beiden Feldern definierte Bedienfunktion nicht ausgeführt. Es sei an dieser Stelle angemerkt, dass dies nur ein Beispiel aus einer Vielzahl möglicher Bedienhandlungen ist, die ebenfalls als weitestgehend fehlersicher eingestuft werden können. Neben der gleichzeitigen Berührung von Feldern aus unterschiedlichen Teilbereichen kann beispielsweise auch eine bestimmte Abfolge bei der Berührung definiert werden. Ferner ist es möglich, dass nach einer vordefinierten Bedienhandlung, die das Berühren von Feldern aus unterschiedlichen Teilbereichen erfordert, nachfolgend für eine vorgegebene oder vorgebbare Zeitdauer das Berühren lediglich eines Feldes ebenfalls als sicher angesehen werden kann, da eine Überprüfung der Funktionsfähigkeit des Touchscreens 2 in bestimmten Zeitintervallen ebenfalls die Betriebssicherheit des Touchscreens 2 gegenüber herkömmlichen Touchscreens wesentlich erhöht.

Weiterhin sei an dieser Stelle angemerkt, dass die Erfindung lediglich anhand eines sehr einfachen Ausführungsbeispiels erläutert wurde, das lediglich die Berührung von Feldern aus unterschiedlichen Teilbereichen des Touchscreens 2 erfordert. Basierend auf diesem Grundprinzip können jedoch auch wesentlich komplexere Bedienhandlungen definiert werden, die beispielsweise so genannte Gesten in Form vordefinierter Bewegungen über den Bildschirm mit einschließen. Wesentlich dabei ist, dass auch derartige komplexere Bedienhandlungen Berührungen aus mehreren Teilbereichen des betreffenden Touchscreens einschließen, in denen die Sensorik nach unterschiedlichen Funktionsprinzipien arbeitet.

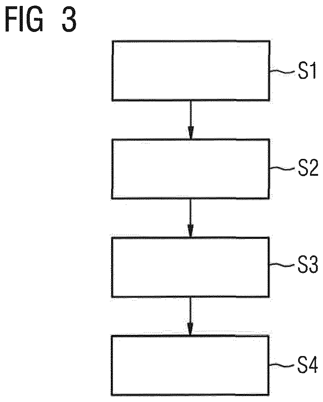

Figur 3 veranschaulicht in einem einfachen Blockschaltbild die erforderlichen Verfahrensschritte zum Erfassen von erfindungsgemäßen an einem Touchscreen eines Touchscreen-Gerätes zur Verwendung in einem industriellen Automatisierungssystem vorgenommenen Bedienhandlungen. Hierzu wird zunächst in einem Verfahrensschritt S1 ein Touchscreen bereitgestellt, bei dem die Erfassung von Berührungen der Oberfläche auf wenigstens zwei diversitären Funktionsprinzipien beruht. Dies bedeutet, der Touchscreen umfasst wenigstens zwei Sensortechniken, die unabhängig voneinander arbeiten und zur Erkennung von Berührungen dienen.

In einem Verfahrensschritt S2 erfolgt eine Berührung des Touchscreen, die mittels eines ersten Sensorsystems, welches auf dem ersten Funktionsprinzip beruht, erkannt wird.

In einem weiteren Verfahrensschritt S3 erfolgt eine Berührung des Touchscreens, welche mit einem zweiten Sensorsystem erfasst wird, welches auf einem zweiten Funktionsprinzip beruht. Erfindungsgemäß sind die beiden Funktionsprinzipien diversitär, d.h. sie beruhen auf der Erfassung unterschiedlicher physikalischer Größen. So werden durch die Funktionsprinzipien beispielsweise nicht zweimal Kapazitäten bzw. Kapazitätsänderungen erfasst.

In einem Verfahrensschritt S4 werden Bedienhandlungen des Benutzers erfasst und mit vordefinierten Bedienhandlungen verglichen, zu denen Daten in einem Speicher des betreffenden Touchscreen-Geräts hinterlegt sind. Wird eine Übereinstimmung der von dem Benutzer vorgenommenen Bedienhandlungen mit einer definierten Bedienhandlung festgestellt, so wird die der definierten Bedienhandlung zugeordnete Bedienfunktion ausgelöst bzw. ausgeführt.

## Patentansprüche

1. Touchscreen-Gerät (1) zur Verwendung in einem industriellen Automatisierungssystem, umfassend wenigstens einen Touchscreen (2) sowie einen Touchscreen-Controller (3), wobei bei dem Touchscreen-Gerät (1) Bedienhandlungen eines Benutzers mittels wenigstens zwei diversitärer Funktionsprinzipien zum Erkennen einer Berührung erfassbar sind, wobei ein erstes Funktionsprinzip lediglich in einem ersten Teilbereich (21) des Touchscreens (2) realisiert ist und
ein zweites Funktionsprinzip lediglich in einem zweiten Teilbereich (22) des Touchscreens (2) realisiert ist,
wobei eine Bedienhandlung zum Auslösen oder Ausführen einer von dem Touchscreen-Gerät (1) ausführbaren Bedienfunktion derart definiert ist, dass die Bedienfunktion nur bei gleichzeitiger Berührung wenigstens eines bestimmten Feldes innerhalb des ersten Teilbereichs (21) und eines bestimmten Feldes (P1) innerhalb des zweiten Teilbereichs (22) ausgelöst bzw. ausgeführt wird, wobei im ersten Teilbereich (21) ein resistives oder induktives Funktionsprinzip zum Erfassen von Berührungen realisiert ist und wobei der zweite Teilbereich (22) den ersten Teilbereich (21) umgibt.

2. Touchscreen-Gerät (1) nach Anspruch 1, wobei ein kapazitives Funktionsprinzip zum Erfassen von Berührungen realisiert ist.

3. Touchscreen-Gerät (1) nach Anspruch 1 oder 2, wobei ein resistives Funktionsprinzip zum Erfassen von Berührungen realisiert ist.

4. Touchscreen-Gerät (1) nach einem der Ansprüche 1 bis 3, wobei ein induktives Funktionsprinzip zum Erfassen von Berührungen realisiert ist.

5. Touchscreen-Gerät (1) nach einem der Ansprüche 1 bis 4, wobei ein optisches Funktionsprinzip zum Erfassen von Berührungen realisiert ist.

6. Verfahren zum Erfassen einer an einem Touchscreen (2) eines Touchscreen-Geräts (1) zur Verwendung in einem industriellen Automatisierungssystem vorgenommenen Bedienhandlung eines Benutzers, wobei Berührungen des Touchscreen (2) während der Bedienhandlung durch zwei diversitäre Funktionsprinzipien zum Erreichen der Berührungsempfindlichkeit des Touchscreens (2) erfasst werden, wobei
in einem ersten Teilbereich (21) des Touchscreens (2) lediglich ein erstes Funktionsprinzip und in einem zweiten Teilbereich (22) lediglich ein zweites Funktionsprinzip realisiert ist, wobei im ersten Teilbereich (21) ein resistives oder induktives Funktionsprinzip zum Erfassen von Berührungen realisiert ist und wobei der zweite Teilbereich (22) den ersten Teilbereich (21) umgibt,
wobei wenigstens eine bestimmte Bedienhandlung zum Auslösen oder Ausführen einer damit verbundenen bestimmten Bedienfunktion so definiert wird, dass sie sowohl eine Berührung des ersten Teilbereichs (21) als auch eine Berührung des zweiten Teilbereichs (22) erfordert
und wobei die Bedienhandlung so definiert wird, dass sie wenigstens für eine bestimmte Zeitdauer die gleichzeitige Berührung sowohl des ersten Teilbereichs (21) als auch des zweiten Teilbereichs (22) erfordert.

## Claims

1. Touchscreen device (1) for use in an industrial automation system, comprising at least one touchscreen (2) as well as a touchscreen controller (3), wherein in the touchscreen device (1) operating actions of a user are able to be captured by means of at least two diverse functional principles for identifying a touch instance, wherein
a first functional principle is implemented solely in a first subregion (21) of the touchscreen (2) and
a second functional principle is implemented solely in a second subregion (22) of the touchscreen (2),
wherein an operating action for triggering or executing an operating function which can be executed by the touchscreen device (1) is defined such that the operating function is only triggered or executed when at least one particular field (PI) within the first subregion (21) and a particular field (PI) within the second subregion (22) are touched simultaneously, wherein a resistive or inductive functional principle for capturing touch instances is implemented in the first subregion (21) and wherein the second subregion (22) surrounds the first subregion (21).

2. Touchscreen device (1) according to claim 1, wherein a capacitive functional principle for capturing touch instances is implemented.

3. Touchscreen device (1) according to claim 1 or 2, wherein a resistive functional principle for capturing touch instances is implemented.

4. Touchscreen device (1) according to one of claims 1 to 3, wherein an inductive functional principle for capturing touch instances is implemented.

5. Touchscreen device (1) according to one of claims 1 to 4, wherein an optical functional principle for capturing touch instances is implemented.

6. Method for capturing an operating action of a user made on a touchscreen (2) of a touchscreen device (1) for use in an industrial automation system, wherein touch instances on the touchscreen (2) during the operating action are captured by two diverse functional principles for achieving the touch sensitivity of the touchscreen (2), wherein
solely a first functional principle is implemented in a first subregion (21) of the touchscreen (2) and solely a second functional principle is implemented in a second subregion (22) of the touchscreen (2), wherein a resistive or inductive functional principle for capturing touch instances is implemented in the first subregion (21) and wherein the second subregion (22) surrounds the first subregion (21),
wherein at least one particular operating action for triggering or executing a particular operating function associated therewith is defined such that it requires both a touching of the first subregion (21) and a touching of the second subregion (22)
and wherein the operating action is defined such that it requires the simultaneous touching of both the first subregion (21) and the second subregion (22) at least for a particular period of time.

## Revendications

1. Appareil (1) à écran tactile à utiliser dans un système d'automatisation industriel, comprenant au moins un écran (2) tactile, ainsi qu'une unité (3) de commande d'écran tactile, dans lequel, dans l'appareil (1) à écran tactile, des manipulations de commande d'un utilisateur peuvent être détectées au moyen de deux principes de fonctionnement en diversité, de reconnaissance d'un contact, un premier principe de fonctionnement étant réalisé seulement dans une première région (21) partielle de l'écran (2) tactile et un deuxième principe de fonctionnement étant réalisé seulement dans une deuxième région (22) partielle de l'écran (2) tactile,
dans lequel une manipulation de commande pour le déclenchement ou l'exécution d'une fonction de commande pouvant être exécutée par l'appareil (1) à écran tactile est définie de manière à ce que la fonction de commande ne se déclenche ou ne s'exécute que par le contact simultané d'au moins une zone déterminée dans la première région (21) partielle et d'une zone (P1) déterminée dans la deuxième région (22) partielle, dans lequel, dans la première région (21) partielle, un principe de fonctionnement résistif ou inductif est réalisé pour détecter des contacts, et dans lequel la deuxième région (22) partielle entoure la première région (21) partielle.

2. Appareil (1) à écran tactile suivant la revendication 1, dans lequel un principe de fonctionnement capacitif est réalisé pour détecter des contacts.

3. Appareil (1) à écran tactile suivant la revendication 1 ou 2, dans lequel un principe de fonctionnement résistif est réalisé pour détecter des contacts.

4. Appareil (1) à écran tactile suivant l'une des revendications 1 à 3, dans lequel un principe de fonctionnement inductif est réalisé pour détecter des contacts.

5. Appareil (1) à écran tactile suivant l'une des revendications 1 à 4, dans lequel un principe de fonctionnement optique est réalisé pour détecter des contacts.

6. Procédé de détection d'une manipulation de commande d'un utilisateur effectuée sur un écran (2) tactile d'un appareil (1) à écran tactile à utiliser dans un système d'automatisation industriel, dans lequel on détecte des contacts de l'écran (2) tactile pendant la manipulation de commande par deux principes de fonctionnement en diversité pour obtenir la sensibilité au contact de l'écran (2) tactile, dans lequel
dans une première région (21) partielle de l'écran (2) tactile, seulement un premier principe de fonctionnement, et dans une deuxième région (22) partielle, seulement un deuxième principe de fonction est réalisé, dans lequel, dans la première région (21) partielle, un principe de fonctionnement résistif ou inductif pour détecter des contacts est réalisé, et dans lequel la deuxième région (22) partielle entoure la première région (21) partielle,
dans lequel on définit au moins une manipulation de commande déterminée pour le déclenchement ou l'exécution d'une fonction de commande déterminée, qui y est reliée, de manière à ce qu'elle exige à la fois un contact de la première région (21) partielle et un contact de la deuxième région (22) partielle
et dans lequel on définit la manipulation de commande de manière à ce qu'elle exige, au moins pour un laps de temps déterminé, le contact simultané à la fois de la première région (21) partielle et de la deuxième région (22) partielle.
